# EUROPEAN PATENT APPLICATION

(11) **EP 2 797 194 A1**
(43) Date of publication of application: **29.10.2014**
(21) Application number: 14165528.2
(22) Date of filing: 23.04.2014
(51) Int. Cl.: H02H 7/125

(54) **Systems and methods for electronic TRU input protection**

(30) Priority: 26.04.2013 US 201361816414 P; 07.03.2014 US 201414200384
(71) Applicant: Hamilton Sundstrand Corporation, Windsor Locks, CT 06096-1010 (US)
(72) Inventor: Seagren, Robert L., Rockford, IL Illinois 61114 (US); Rocha, Jomar Avancini, Machesney Park, IL Illinois 61115 (US); Wagner, Carl A., Beloit, WI Wisconsin 53511 (US)
(74) Representative: Hughes, Andrea Michelle

(57) **Abstract**

A system comprising a transformer rectifier unit (TRU, 110) and a protection module (116) operatively connected to an alternating current (AC) bus (104) and configured to receive an AC power signal from the AC bus (104). The protection module is configured to monitor one or more parameters of the AC power signal and is configured to control a protection module output in response to the one or more parameters of the AC power signal. The protection module output is operatively connected to the TRU, which is configured to generate a direct current (DC) output signal. An associated method is also disclosed.

## Description

### CROSS-REFERENCE TO RELATED APPLICATIONS

This patent application claims priority to U.S. Provisional Application No. 61/816,414, filed March 26, 2013, which is incorporated herein by reference in its entirety.

### FIELD

The present teachings relate to systems and methods for electronic TRU input protection, and more particularly, to platforms and techniques for providing protective circuitry between an alternating current power sources and a transformer rectifier unit.

### BACKGROUND

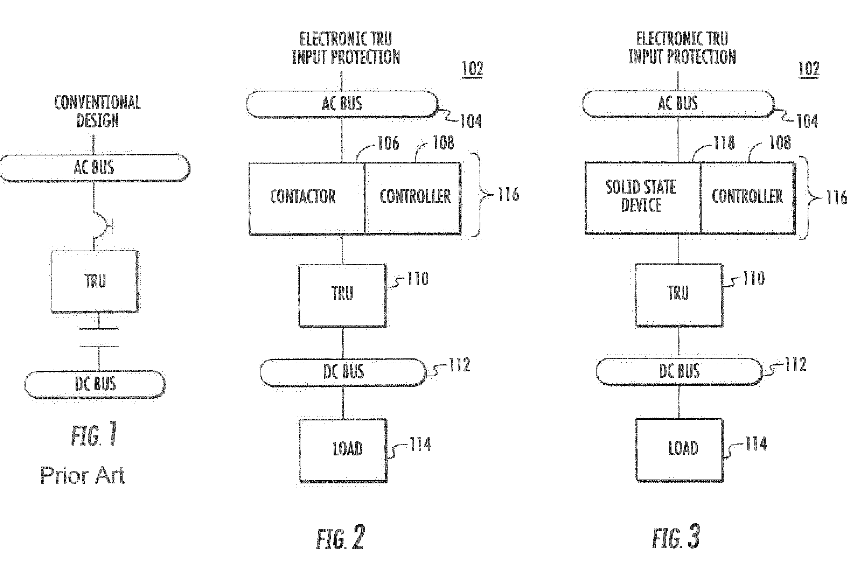

In the field of electrical power systems, the use of a power converter component referred to as a transformer rectifier unit (TRU) has been known. An example of a conventional TRU with accompanying circuitry is shown in FIG. 1. TRU elements in general can be used to convert input alternating current (AC) power sources to direct current (DC) output. Conventional TRUs can incorporate one or more magnetically coupled primary windings which receives the AC input signal in a first winding, and develops an AC signal at a higher, or lower level, or adjustment in voltage phase timing in a secondary magnetically coupled winding. The TRU can be configured to receive the AC input in three-phase form, with each phase typically 120 degrees apart. The described TRU functions, features, and interfaces apply equally to devices also known as Autotransformer Rectifier Units, or ATRUs. The instant invention provides an interface to the TRU, ATRU, motor load, or other device with either leading, or lagging phase characteristics of currents versus applied voltages.

Rectifying elements within the TRU can then generate one or more DC output signals, for instance to drive a motor or other load. Rectification can be achieved using diodes, transistors, operational amplifiers (op amps), or other circuit elements.

However, in known TRU circuits such as that shown in FIG. 1, the TRU unit itself can be subjected to voltage surges, spikes or other input anomalies, distortions, or noise which can, depending on intensity or duration, threaten to damage or destroy the coils of the TRU transformer, other parts of the TRU unit, or connected load utilization equipment. Moreover, output side of the overall TRU circuit is typically passed through an additional filter element (as shown) to remove unwanted AC harmonic distortion and ripple voltage contamination that may be superimposed on the desired DC output signal.

It may be desirable to provide methods and systems for electronic TRU input protection, in which a TRU element and output DC wiring, and utilization equipment can all be protected by devices on its input side against output wiring faults, and source voltage surges, spikes or other input problems, as well as minimize power consumption from the source.

### SUMMARY

Disclosed herein is a circuit including a protection module operatively connected to an alternating current (AC) bus and configured to receive an AC power signal from the AC bus. The protection module is configured to monitor one or more parameters of the AC power signal and is configured to control a protection module output in response to the one or more parameters of the AC power signal. The protection module output is operatively connected to a transformer rectifier unit (TRU), which is configured to generate a direct current (DC) output signal.

Another aspect of the disclosure provides a method for converting an alternating current (AC) input signal to a direct current (DC) output signal. The AC input signal is delivered to a controller. One or more parameters of the AC input signal are measured and used to generate a controlled AC power signal from the AC input signal. The controlled AC power signal is delivered to a transformer rectifier unit or autotransformer rectifier unit, which generates the DC output signal from the controlled AC power signal.

### BRIEF DESCRIPTION OF THE DRAWINGS

The accompanying drawings, which are incorporated in and constitute a part of this specification, illustrate embodiments of the present teachings and together with the description, serve to explain the principles of the present teachings. In the figures:
FIG. 1 illustrates a transformer rectifier unit (TRU) circuit implementation, according to conventional configurations;
FIG. 2 illustrates a transformer rectifier unit (TRU) circuit implementation, according to various implementations of the present teachings;
FIG. 3 illustrates a transformer rectifier unit (TRU) circuit implementation according to various further implementations of the present teachings;
FIG. 4 illustrates an overall TRU circuit, according to further aspects of the present teachings;
FIG. 5 illustrates an overall TRU circuit, according to additional aspects of the present teachings;
FIG. 6 illustrates a current sense module that can be incorporated in elements of an overall TRU circuit, according to aspects of the present teachings;
FIG. 7 illustrates a set of trip data and other information related to an overall TRU circuit, according to aspects of the present teachings;
FIG. 8 illustrates various hardware, software, and other resources that can be incorporated in a controller that can be used in a transformer rectifier unit (TRU) circuit implementation, according to various implementations of the present teachings;
FIG. 9 illustrates a graph of steady state normal line-neutral and line-line voltages; (Fig 9 is non-essential to innovation/algorithms, and could be removed)
FIG. 10 illustrates a line-neutral referenced load and a line-line referenced load;
FIG. 11 illustrates a graph of line-neutral and line-line voltages, used for starting some types of utilization equipment loads in another embodiment;
FIG. 12 illustrates a graph of line-neutral and line-line voltages, in another embodiment including undesirable DC content;
FIG. 13 illustrates a TRU control protection switch, in another embodiment;
FIG. 14 illustrates a state chart or diagram of control logic for TRU protection, according to implementations described herein;
FIG. 15 illustrates an overall TRU control circuit, according to further regards;
FIG. 16 illustrates a graph of certain switching activity that can be performed, according to implementations;
FIG. 17 illustrates a graph of certain switching activity that can be performed, according to implementations;
FIG. 18 illustrates a graph of certain switching activity including lag effects, according to implementations;
FIG. 19 illustrates a graph of certain switching activity including further lag effects, according to implementations;
FIG. 20 illustrates a graph of switching activity, according to further aspects;
FIG. 21 illustrates switching activity including longer time scales, according to implementations;
FIG. 22 illustrates switching activity, according to additional implementations; and
FIG. 23 illustrates switching activity, according to further aspects.

### DETAILED DESCRIPTION

Embodiments of the present teachings relate to systems and methods for electronic TRU input protection. More particularly, embodiments relate to platforms and techniques for configuring an input switch module to be inserted between the AC power source of a TRU, and the TRU itself to prevent voltage surges, spikes or other noise, distortion, thermal overload, or undesired signals or conditions from reaching or affecting the transformer and other constituent parts of the TRU unit. Improved output power quality on the DC side can also be achieved, which can eliminate the need for DC output overvoltage snubbers and transorbs to mitigate surges. Displays, electronics, and/or other loads can likewise receive cleaner more stable DC power.

Reference will now be made in detail to exemplary embodiments of the present teachings, which are illustrated in the accompanying drawings. Where possible the same reference numbers will be used throughout the drawings to refer to the same or like parts.

FIG. 2 illustrates an overall TRU circuit 102 in which systems and methods for electronic TRU input protection can operate, in some examples. In aspects as shown, a TRU 110 can receive an AC power signal supplied by an AC bus 104. The AC bus 104 supplies AC power, for instance at 120 or 230 volts. In some examples, the AC power supplied by the AC bus 104 can for instance be three-phase power, but can be two-phase power, or use other AC configurations.

In embodiments as shown in FIG. 2, the power supplied via AC bus 104 is not connected directly to the TRU 110, but instead to a protection module 116 which in turn connects to the TRU 110. In some examples, the protection module 116 comprises multiple elements, circuits, or other resources, including as shown in the figure, a contactor 106 and a controller 108. The contactor 106 comprises a switched relay component, or other type of switchable element. The contactor 106 can receive the three-phase or other power delivered by the AC bus 104, and deliver it to the TRU 110 under control of the controller 108. In some examples, the controller 108 comprises, for example, a programmed control element such as a microprocessor or microcontroller operating under programmed control to carry out rectification and other power conversion operations in connection with the TRU 110. In some examples, the controller 108 can be integrated into the TRU 110, and/or can be located locally or remotely to the TRU 110, for instance by serial data bus or other network connection.

As shown in FIG. 2, the output side of the TRU 110 can be connected to a DC bus 112, to which a load 114 or other elements can be attached. The DC bus 112 can be used, for instance, to supply power to automotive, avionic, industrial, and/or other components or circuits, on a voltage-rectified basis. The load 114 that can be attached to the DC bus 112 comprises, for example, a display panel, computer, sensors, DC motors, and/or other devices or peripherals. In some examples, the controller 108 can operate to sense line conditions on the AC bus 104, including, for example, to detect voltage surges, spikes or other conditions that could be dangerous to the TRU 110 and/or other parts of the overall TRU circuit 102. In some examples, the controller 108 is programmed to actuate or de-actuate the contactor 106 to remove the relay connections or otherwise throw open the circuit supplying AC power from the AC bus 104 to the TRU 110, during the occurrence of that or other types of line fault. In further examples, the controller 108 can operate to take other actions when a fault condition on the AC bus 104 is detected, such as to reduce or otherwise modify the AC voltage delivered to the TRU 110, and/or reduce or otherwise modify the DC voltage supplied from the output side of the TRU 110 to the DC bus 112. The effects of the protection of the TRU 110 by controller 108 can also include a cleaner output signal on the DC bus 112.

In some embodiments, as for instance shown in FIG. 3, an overall TRU circuit 122 similar to the overall TRU circuit 102 shown in FIG. 2 can be employed, but with the use of a solid state device 118 instead of a contactor 106. In implementations as shown, the controller 108 can operate similarly to detect and respond to dangerous or anomalous conditions on the AC bus 104, but rather than operate to control a contractor 106 consisting of an electromechanical relay and related parts, instead operate to control the solid state device 118 to connect, disconnect, or modify input or output signals. The solid state device 118 can for instance be or include a transistor or other electronic switching device. By electrically or logically controlling the switching action of the solid state device 118, the protection module 116 as configured in FIG. 3 can likewise avoid communicating dangerous voltage spikes or other signal conditions to the TRU 110. Similarly, improved quality of power to the DC bus 112 can likewise be delivered to drive the load 114. This can result in safer and more reliable operation of the load 114.

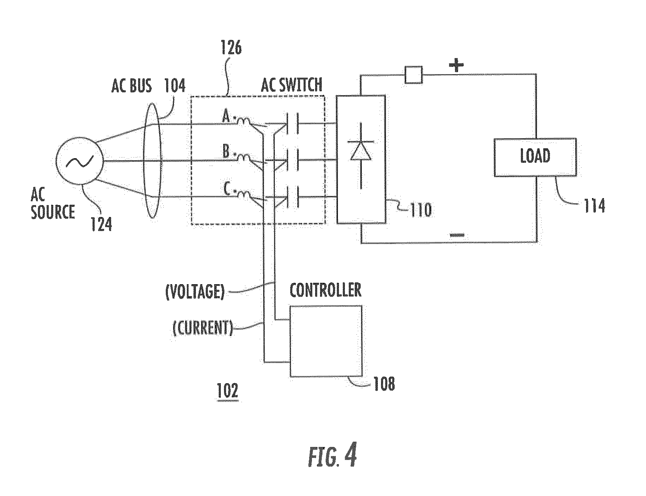

FIG. 4 illustrates an overall TRU circuit 102 (or 122), according to further implementations of the present teachings. In implementations as shown, an AC source 124 such as a generator, power line, and/or other source of AC power can be delivered to the AC bus 104, in three-phase form. In aspects as shown, the three-phase AC power can be received at an AC switch 126, which can be connected both to the TRU 110 as well as the controller 108. The load as shown 114 can be connected to a rectified output of the TRU 110. The controller 108 can be connected to all three phases of the AC power at the AC switch 126, and operate to sense both AC and DC voltage and/or current. In some examples, the controller 108 can, via the attachments to the AC switch 126 and the TRU 110, in general operate to monitor and control a variety of power parameters and operations, including: AC and/or DC current, AC switch control and protection, AC and DC voltage, and internal parameters of the TRU 110 itself including DC voltage and current, temperature, fan status, any circuit breaker, fuse, or relay status, or others. By monitoring those parameters or others, the TRU 110 can operate to ensure stable output to the load 114, and avoid overvoltage, overcurrent, overheating, or other conditions.

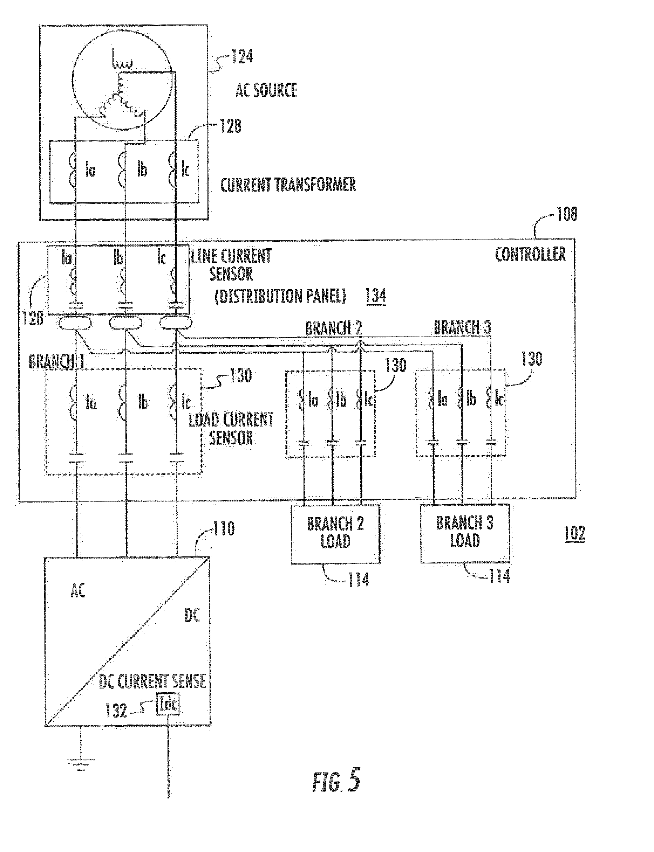

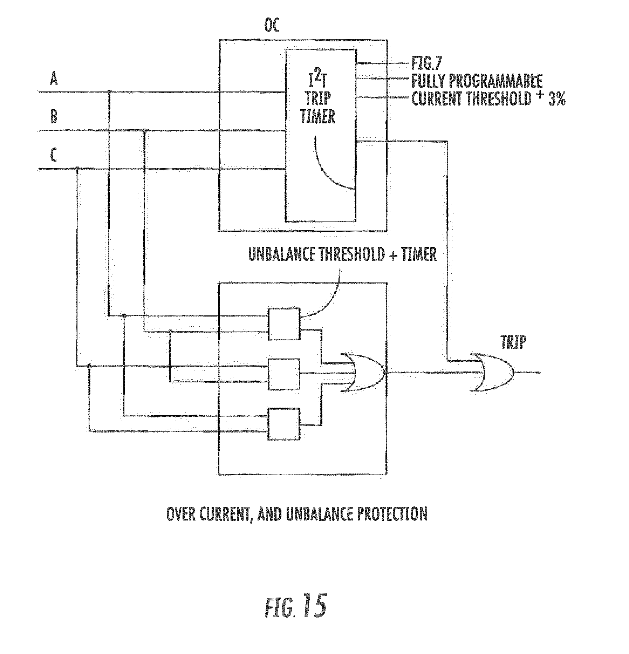

FIG. 5 illustrates an overall TRU circuit 102 (or 122), according to another embodiment of the present disclosure. In implementations as shown, an AC source 124 can supply three-phase AC power to a current transformer, measurement shunt, or other sensor device 128, which in turn is connected to the controller 108. In some examples, as shown, the controller 108 can incorporate one or more line sensors 128 which sense the incoming line current seen by controller 108. The controller 108 can further incorporate a distribution panel 134. The controller 108 can also, as shown, incorporate one or more load current sensors 130, which can sense the current delivered to three branches (Branch 1, 2 and 3) of the load 114 via the distribution panel 134. In aspects as shown, the load 114 on Branch 1 can consist of a load connected to an output of the TRU 110 operating on DC current, which current can be sensed using one or more load current sensors 132. Alternatively, the load 114 on Branches 2 and 3 can be configured similarly as Branch 1. FIG. 15 illustrates an embodiment of an overall TRU circuit similar to that shown in FIG. 4 and FIG. 5.

The controller 108 can be configured to control the switching device with optimum timing of the initial application of AC voltage to the load to improve the resulting load behavior. Zero voltage turn-on switching is well known to those skilled in the art of power circuits. However, switching at identically zero voltage is not optimum for minimizing peak load transient current for some load types, and the initial DC average value of the applied voltage. First, determine zero crossing of voltage by measuring period of previous zero crossings, and then turn on each phase current switch at a time which minimizes the DC offset voltage and DC inrush current caused by AC voltage asymmetry. This is done for single phase, (Line-Neutral) connected loads, or Line-Line connected loads using different phasing determined by load suite programming tables. The optimum algorithm may use 'pre-emptive' phase advance timing switching device connection ahead of the voltage zero crossing, to minimize DC offset voltage and currents. The benefits of this method provide better voltage power quality, and lower current demand from source into magnetic loads. This allows less AC inrush current due to lower DC offset voltages being applied to the TRU AC magnetic core, and less resulting magnetic circuit saturation for some types of TRUs.

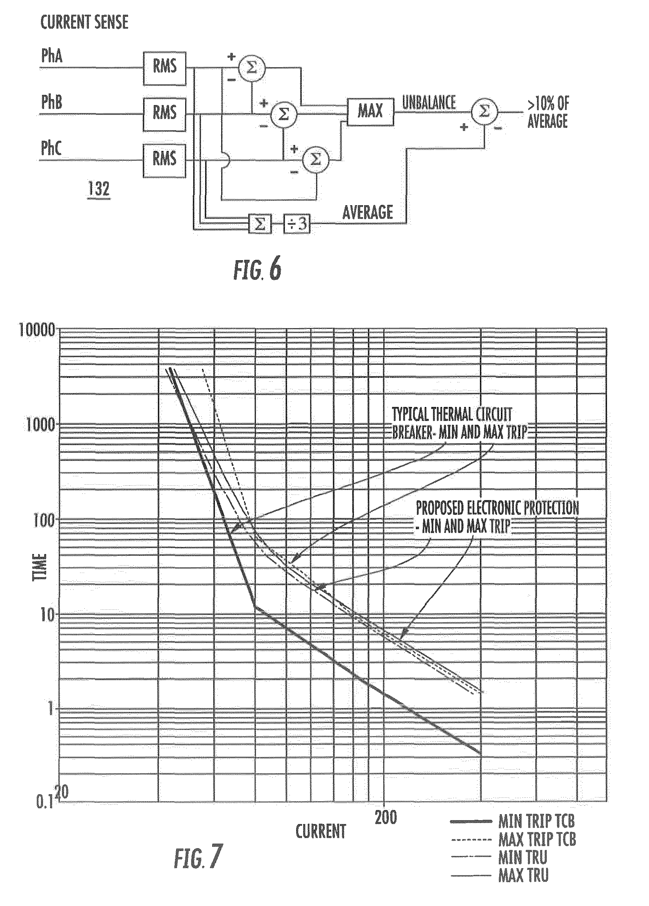

FIG. 6 illustrates an internal configuration and use of an AC current sense module 132, such as illustrated in FIG. 5. As shown, the AC current sense module can use summing circuitry which sums RMS current over the three phases of AC power received at the TRU 110, to determine the magnitude of unbalanced current conditions in the AC input to the TRU 110.

In terms of electrical operation of the overall TRU circuit 102, FIG. 7 illustrates a graph of maximum and minimum tripping conditions for circuit-breaking activity of the overall TRU circuit 102.

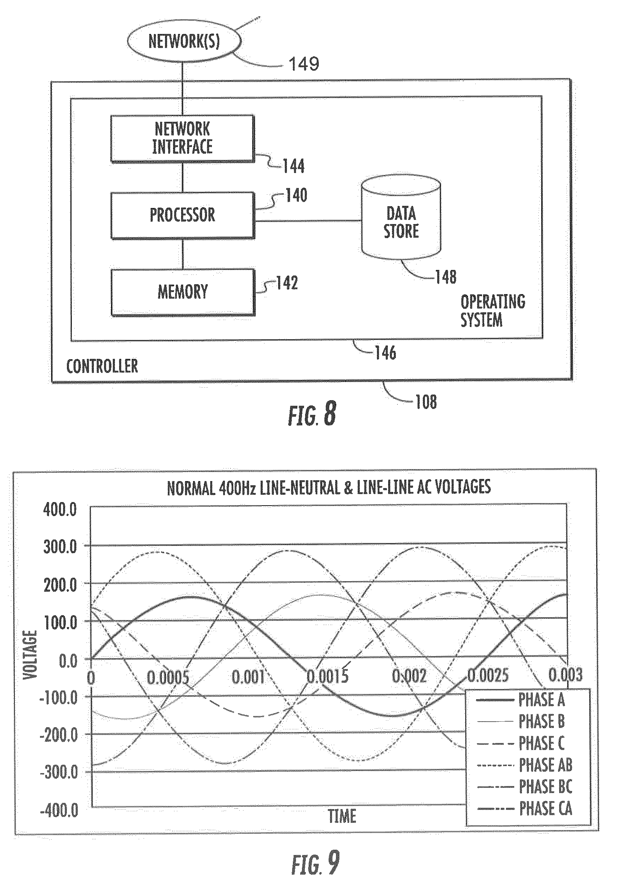

FIG. 8 illustrates various hardware, software, and other resources that can be used in the controller 108, in implementations of electronic TRU input protection. As shown, the controller 108 can comprise a processor 140 communicating with memory 142, such as electronic random access memory, operating under control of or in conjunction with an operating system 146. The processor 140 in embodiments can be incorporated in one or more microprocessors, microcontrollers, back planes, servers, clusters, and/or other computers or hardware resources, and/or can be implemented using cloud-based resources. The operating system 146 can be, for example, a distribution of the Linux™ operating system, the Unix™ operating system, or other open-source or proprietary operating system or platform. The processor 140 can communicate with data store 148, such as a database stored in memory 142, and/or on a local hard drive or drive array, to access or store software to sense, detect, and manage voltage conditions in the inputs and outputs to the TRU 110. In implementations, the processor 140 can further communicate with a network interface 144, such as an Ethernet or wireless data connection, which in turn communicates with the one or more networks 149, such as the Internet or other public or private networks. Other configurations of the controller 108, associated circuits, network connections, and other hardware, software, and service resources are possible.

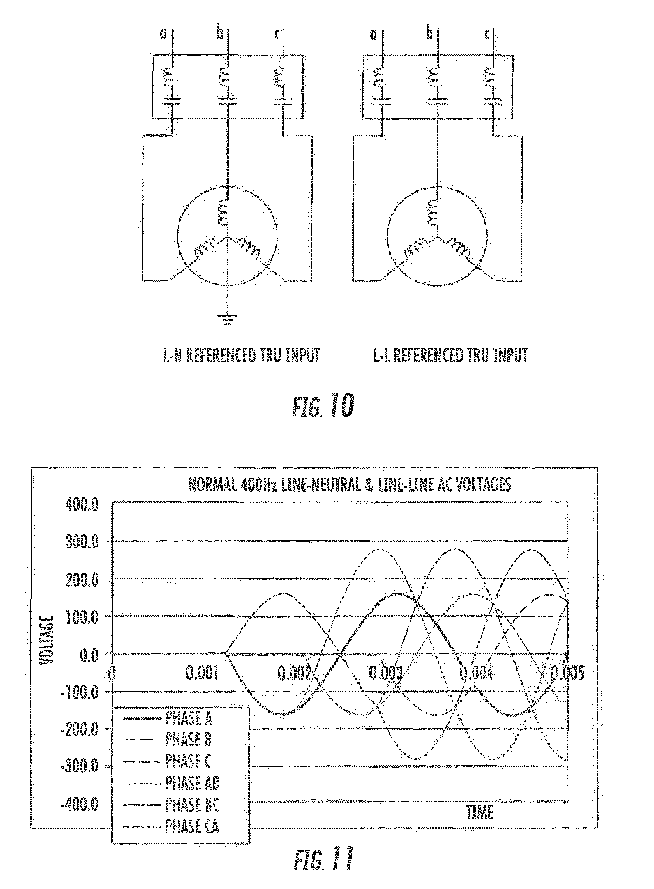

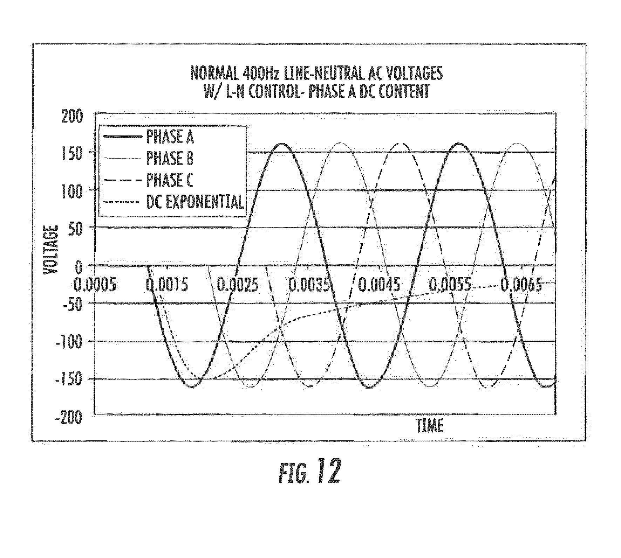

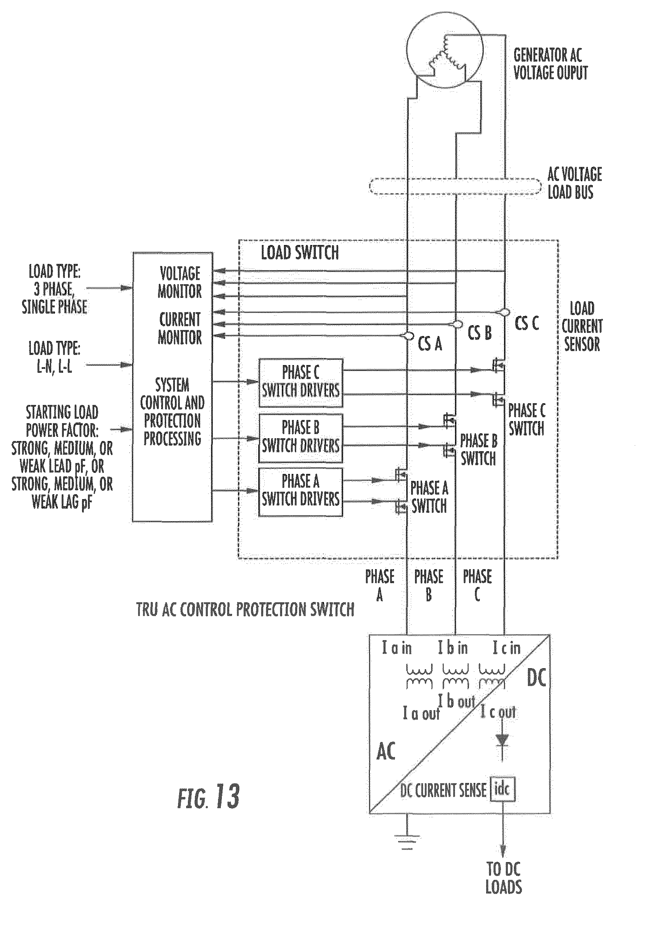

FIG. 9 illustrates a set of line-neutral and line-line AC voltages that can be produced by TRU circuit 102, according to implementations. FIG. 10 illustrates circuits that can be used to configure or establish line-neutral referenced loads and line-line referenced loads, for phases a, b, and c. FIG. 11 illustrates a set of steady state normal line-neutral and line-line AC voltages that can be produced by TRU circuit 102, according to implementations. FIG. 12 illustrates a set of line-neutral and line-line AC voltages that can be produced by TRU circuit 102, according to various embodiments, including an undesirable DC component of voltage. FIG. 13 illustrates a TRU control protection switch for controlling AC power input.

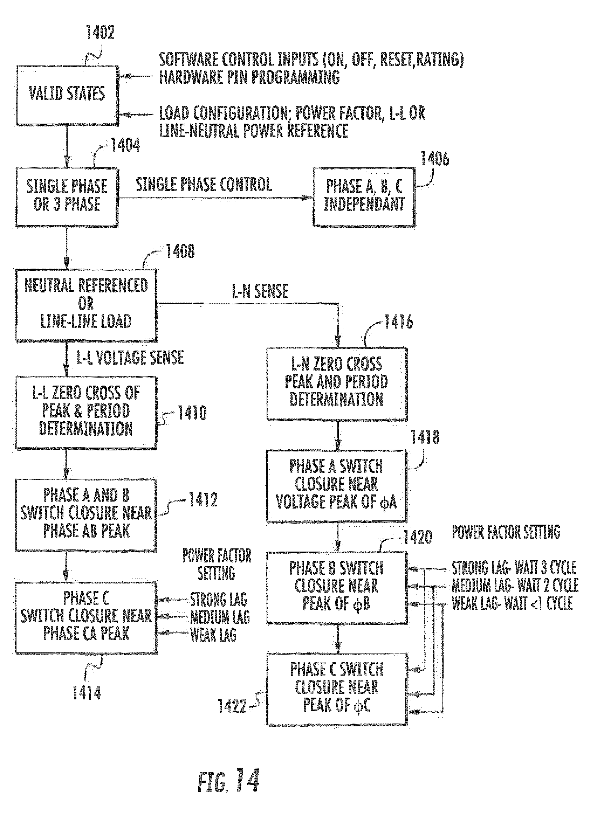

It may be beneficial to use adjustments in timing the start of TRU load configuration types that demand substantial reactive current flow at the time of start, as noted by peaks in phase currents occurring at different times than the peaks of applied voltages. FIG. 14 illustrates a state chart or diagram which identifies how the starting algorithm may change the timing for each phase voltage based on externally defined TRU load characteristics of strong, medium, or weak lagging power factors present at the time of start. The chart further represents the logic of how either overcurrent abnormalities, or unbalance current conditions may result in a protection trip. As shown, the circuit protection response of the overall TRU circuit 102 is improved, providing programmability, flexibility, greater guaranteed output power, and better protection tolerances are some key benefits of solid state controls. Response time can be faster (or slower) than that provided by a conventional thermal breaker, defined by application.

In configurations as shown, the controller 108 can be configured to trip upon detecting any one or more fault conditions in the power regulation operation of the TRU 110 and related elements. For instance, the controller 108 can be set to trip and interrupt power based on the following conditions in the distribution panel. (Set of Conditions 1, below). Said Distribution Panel and protection algorithms may be extended to encompass multiple power branches, beyond the three elements shown. The distribution panel concept and inherent protection shall be scalable to dozens or one hundred or more individual branch elements.

### Set of Conditions 1

Trip if:
(Line 1a - (Load 1 ia + Load 2 ia + Load 3 ia)) > 25 Amperes (A), or
(Line 1b - (Load 1 ib + Load 2 ib + Load 3 ib)) > 25 A; or
(Line 1c - (Load 1 ic + Load 2 ic + Load 3 ic)) > 25 A,
For more than 30 milliseconds, indicating a differential fault in the distribution panel 134.

The controller 108 can also or instead be set to trip and interrupt power based on the following conditions:

### Set of Conditions 2

Trip if:
(Ia rms + Ib rms + Ic rms) * TRUratio - I dc out > 15 amperes (A);
for more than 30 milliseconds indicating a differential fault in the TRU 110 itself.

In aspects the output of the TRU 110 can be characterized by the following relationships:
Nominally; I dc out ≈ (Ia rms + Ib rms + Ic rms) * TRUratio;
TRUratio = Conversion ratio AC/DC currents (constant);
where TRUratio is nominally 3.5 to 4.0 for a 115 V ac rms input, and with a normal 28Vdc output.

Normally, most three phase load elements should demand very well balanced currents across all three phases. When this is not the case, the TRU has usually malfunctioned, and an internal fault has developed. TRU loads which are three phase types should be well balanced except in cases of a failure. The controller 108 can also or instead be set to trip and interrupt power based on the following conditions, and as shown in FIG. 6 and FIG. 15:

### Set of Conditions 3

Trip if:
Load unbalance = Maximum of [Ia nns - Ib rms ], or [Ib rms - Ic rms], or
[Ic rms - Ia rms]; each differenced term in this has an absolute value applied before considering the difference for each being the maximum.
If Load Unbalance > 10% * (Ia rms + Ib rms + Ic rms) / 3;
for > 3 seconds, then the TRU (or other load) unbalance is excessive, and should trip.

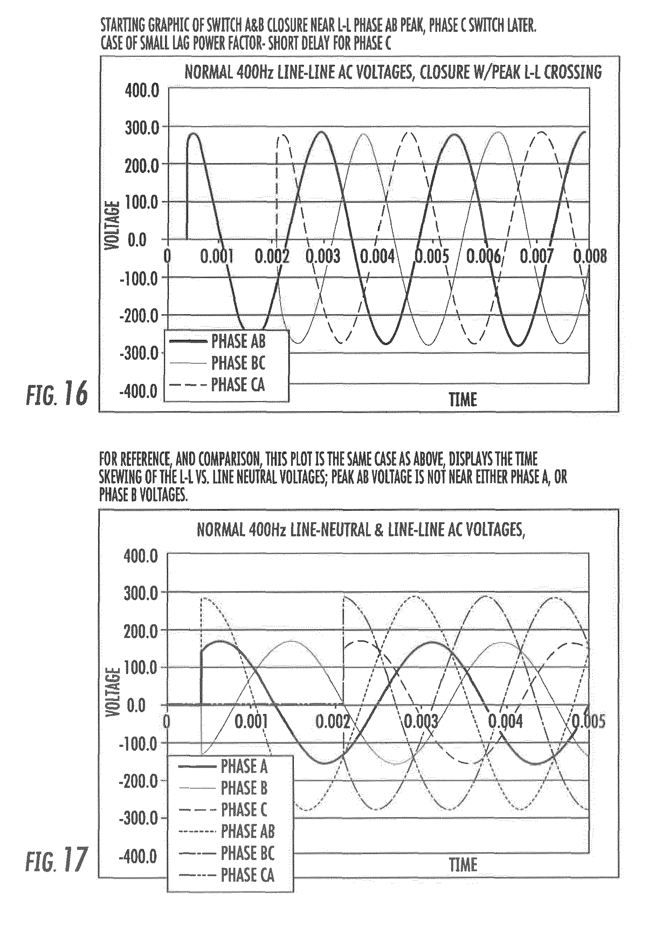

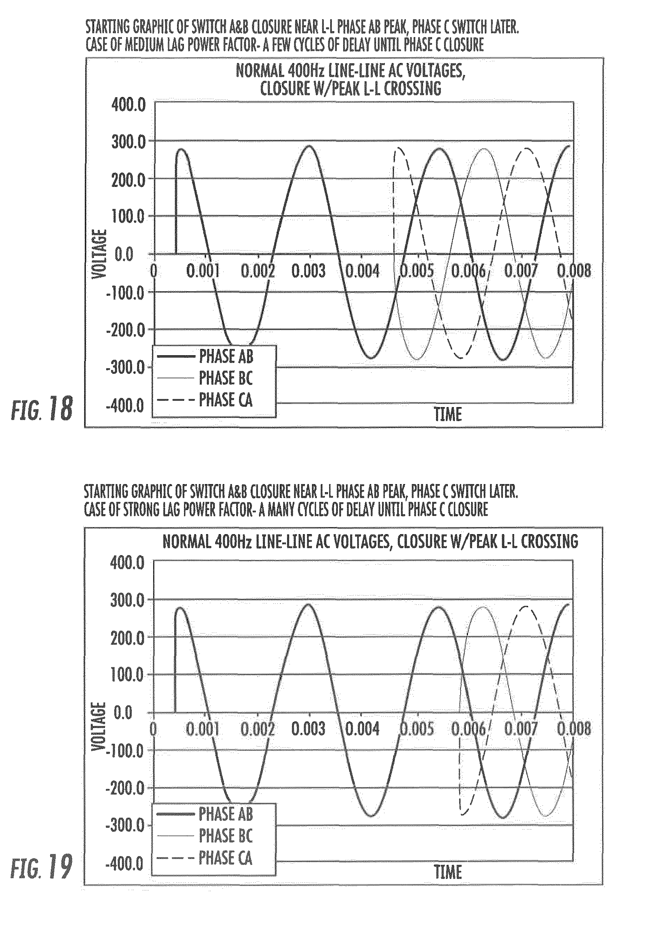

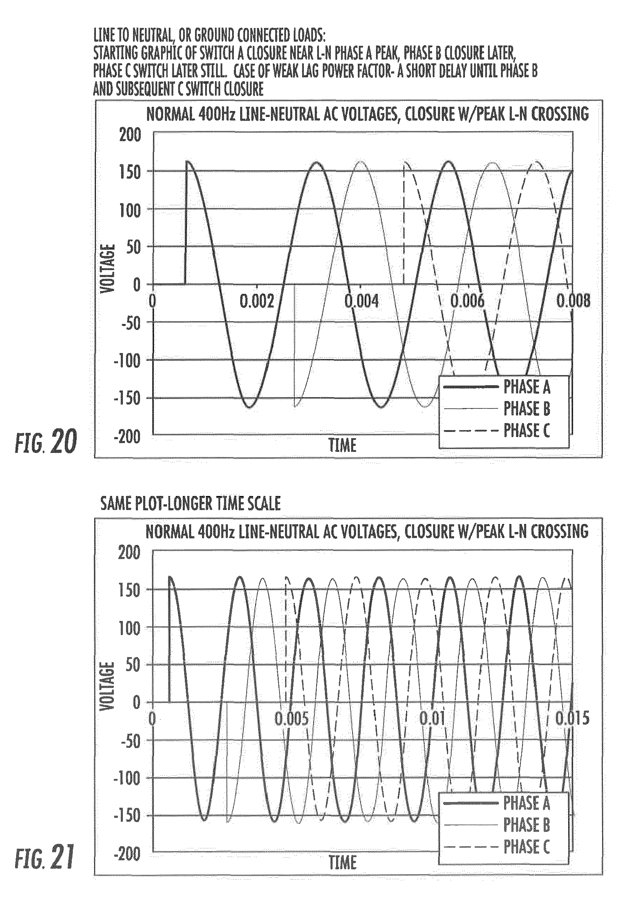

FIGS. 16-23 illustrate switching activity, voltage and current effects, and other characteristics of TRU control operations, according to various implementations of the present teachings. FIG. 16 illustrates switching activity, including the timing of a Line-Line connected TRU with a weak lagging power factor. The figure displays how that switch A & B Closure occurs near the L-L Phase AB voltage peak, and how the phase C switch is later. FIG. 17 displays the same case as above, displays the time skewing of the L-L vs. Line Neutral voltages; peak AB voltage is not near either Phase A, or phase B voltages peak. As shown in FIGS. 18-21, TRU, motor, or other load types with more significant lagging start power factors should delay one, or more of the phase switches for 3, or more cycles of initially applied voltages to reduce the initial total starting power, and currents.

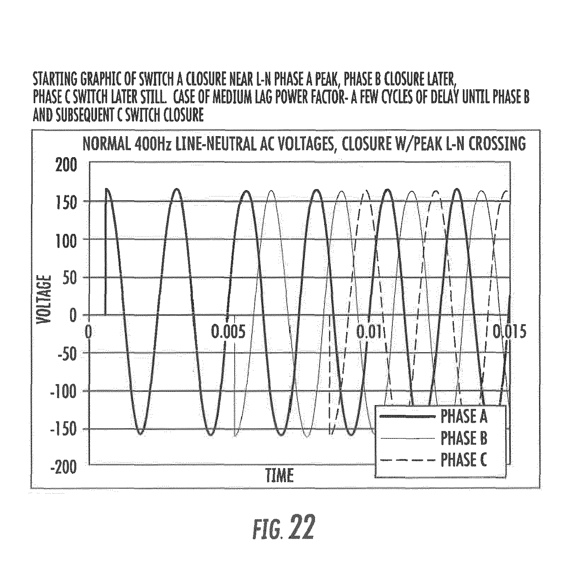

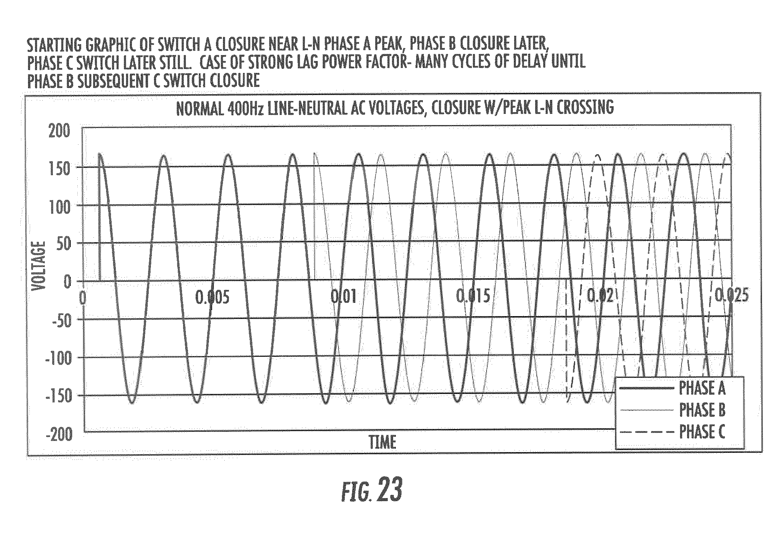

FIGS. 22 and 23 show the timing of switch closure for medium and strong lagging power factor L-N connected TRU circuits, and how these may be adjusted to be switched based on the L-N phase voltages, and also the power factor.

For other utilization load types, such as predominantly AC capacitive loads, the switching near zero voltage for either Line-Neutral, or Line-Line voltage phasing is much closer to optimum for minimizing peak load transient currents, and the resulting load voltages. This is illustrated, for example, in FIG. 11 for an L-N connected capacitive load type TRU. Further, FIG. 14 shows logic that can be used by the controller 108 for optimizing the peak load starting transient currents, depending on the externally defined load characteristics; whether L-N, L-L or lagging (inductive), or leading (capacitive) load types.

Similarly, predominantly AC capacitive loads such as electronically commutated TRUs, it may be beneficial to use adjustments in timing the start to index the more substantial reactive current flow.

The foregoing description is illustrative, and variations in configuration and implementation may occur to persons skilled in the art. For example, while embodiments have been described in which the protection module 116 incorporates one controller 108, in implementations, multiple controllers or applications can operate to control the contactor 106 or solid state device 118. Similarly, while implementations have been described in which the controller 108 operates to control one TRU 110, in implementations, controller 108 (or multiple controllers) can operate to control multiple TRUs, on a local or remote basis. Other resources described as singular or integrated can in embodiments be plural or distributed, and resources described as multiple or distributed can in embodiments be combined. Further modifications may be made to adapt a particular situation or material to the teachings of the disclosure without departing from the essential scope thereof. Moreover, the use of the terms first, second, etc. , do not denote any order or importance, but rather the terms first, second, etc. are used to distinguish one element from another. Furthermore, the use of the terms a, an, etc. do not denote a limitation of quantity, but rather denote the presence of at least one of the referenced item. The scope of the present invention is accordingly intended to be limited only by the following claims.

## Claims

1. A circuit, comprising:
a protection module (116) operatively connected to an alternating current (AC) bus (104) and configured to receive an AC power signal from the AC bus, the protection module configured to monitor one or more parameters of the AC power signal, the protection module further configured to control a protection module output in response to the one or more parameters of the AC power signal, the protection module output being operatively connected to a transformer rectifier unit (TRU) (110), the TRU configured to generate a direct current (DC) output signal.

2. The circuit of claim 1, wherein the protection module comprises a controller (108) for controlling the protection module output.

3. The circuit of claim 2, wherein the protection module further comprises an interface operatively configured receiving the AC power signal from the AC bus, the interface being a contactor, a solid state device, or a sensor device.

4. The circuit of claim 3, wherein the controller is remote from the interface.

5. The circuit of claim 1, further comprising a direct current bus (112) connected to the TRU and configured to communicate the DC output signal to a load.

6. The circuit of claim 1, wherein the one or more parameters of the AC power signal includes a phase of the AC power signal, the protection module controlling the protection module output to improve the symmetry of the AC current waveform associated with the protection module output.

7. The circuit of claim 6, further comprising user settable load suite programming using either hardware or software indexing tables to define the timing of single phase, line-neutral connected loads, or line-line connected loads using different reference frames.

8. The circuit of claim 1, wherein the TRU is an autotransformer rectifier unit.

9. A method for converting an alternating current (AC) input signal to a direct current (DC) output signal, comprising:
delivering the AC input signal to a controller;
monitoring one or more parameters of the AC input signal;
generating a controlled AC power signal from the AC input signal;
delivering the controlled AC power signal to a transformer rectifier unit or autotransformer rectifier unit; and
generating the DC output signal from the controlled AC power signal.

10. The method of claim 9, further comprising, after monitoring the one or more parameters, determining if a fault condition exists.

11. The method of claim 9, wherein monitoring the one or more parameters comprises measuring a root mean square current value.

12. The method of claim 11, wherein generating a controlled AC power signal comprises controlling the timing of an initial application of AC voltage to a load.

13. The method of claim 12, wherein generating a controlled AC power signal minimizes a DC offset voltage.
